# EUROPEAN PATENT APPLICATION

(11) **EP 3 075 715 A1**
(43) Date of publication of application: **05.10.2016**
(21) Application number: 15248029.9
(22) Date of filing: 03.04.2015
(51) Int. Cl.: C04B 28/02, C04B 18/24, C04B 40/00

(54) **CELLULOSE FIBER MIXTURES AND USES THEREOF FOR THE PRODUCTION OF FIBER CEMENT COMPOSITIONS AND PRODUCTS**

(71) Applicant: Redco NV, 1880 Kapelle-op-den-Bos (BE)
(72) Inventor: Ignatyev, Igor A., 9000 Gent (BE); De Lhoneux, Benoit, 5000 Namur (BE); Bordin, Ruben, 2800 Mechelen (BE)
(74) Representative: Vaeck, Elke

(57) **Abstract**

The present invention provides cellulose fiber mixtures for use in the production of fiber cement products at least comprising: (i) micro-cellulose fibers having a Schopper-Riegler degree of between about 70° and about 90°, and (ii) unrefined cellulose fibers having a Schopper-Riegler degree of below about 25°, characterized in that the micro-cellulose fibers having a Schopper-Riegler degree of between about 70° and about 90° are present in an amount of between about 15% and about 50%. The present invention further provides for preparing these cellulose fiber mixtures as well as uses of these cellulose fiber mixtures for the preparation of cellulose fiber cement compositions and for the manufacturing of fiber cement products. In addition, the present invention provides cellulose-based fiber cement compositions and products comprising the cellulose fiber mixtures. Finally, the invention relates to uses of these cellulose-based fiber cement products in the building industry.

## Description

### Field of the invention

The present invention relates to cellulose fiber mixtures as well as methods for preparing such mixtures. The present invention further relates to uses of these cellulose fiber mixtures for the preparation of cellulose fiber cement compositions and for the manufacturing of fiber cement products. In addition, the present invention provides cellulose-based fiber cement compositions and products comprising the cellulose fiber mixtures. Finally, the invention relates to uses of these cellulose-based fiber cement products in the building industry.

### Background of the invention

During the process of fiber cement manufacturing wood pulp fibers are typically refined. Refining processes for opening, beating or defibrillating pulp to obtain fibrillation, increased surface area, increased accessibility and fine particle size have long been known. For instance, ball mills are used for preparing cellulose of several tens of microns in dimension. Studies have indicated that such ball milling breaks the chemical bonds of the cellulose during the dividing process. It is also known to grind cellulose in water under pressure to produce a micro-cellulose with a particle size of less than one micron. In the case of cellulose derivatives, cold milling of the derivatives in liquid nitrogen is also disclosed in the prior art. Sonic pulverization with a ball mill is also a known method of producing cellulose in extremely fine particle size.

The operation of refining prior to fiber cement preparation is particularly necessary for process reasons and sometimes for product performances as well. It renders the cellulose fibers more flexible and conformable due to fiber wall delamination and fibrillates their surface. Simultaneously, fibers are shortened and fines are created.

The known refining processes are however highly energy demanding with energy consumptions of up to 15 kWh/MT/°SR. The total amount of required energy obviously depends on a number of factors but up to 500-800 kWh/MT can be needed. This represents not only a significant cost, but also has a heavy impact on the environment.

It would therefore be highly desirable to have a less costly and environmentally friendly alternative for the above-mentioned energy consumptive wood pulp fiber refining processes.

### Summary of the invention

It is an object of the current invention to provide a more economically and environmentally friendly method for providing fiber cement compositions comprising cellulose fibers.

In this respect, it has been found by the current inventors that the above mentioned needs are met by the compositions, methods and uses according to the present invention. In particular, the present inventors have developed a specific mixture of cellulose fibers, which mixture can be produced with a minimum requirement of energy and cost and is particularly suitable as a fiber starting material for the production of fiber cement compositions and fiber cement products, such as fiber cement building materials. The cellulose fiber mixtures as provided by the present invention comprise only between about 15% and about 50% of micro-cellulose fibers (i.e. used within the context of the present invention for referring to cellulose fibers with a Schopper-Riegler degree of between about 70° and about 90°). Thus, using the cellulose fiber mixture of the present invention, the relative amount of micro-cellulose fibers required to produce fiber cement compositions and products is substantially reduced in comparison with known procedures. Indeed, known cellulose-based fiber cement compositions typically comprise only (i.e. 100% of) micro-cellulose fiber material. It has now been demonstrated by the inventors that using the cellulose mixtures of the invention as a starting material, fiber cement compositions and products can be produced, having at least the same or even improved quality, strength and impact resistance compared to these known cellulose-based fiber cement products.

Furthermore, the micro-cellulose fiber material that is used in the mixtures of the present invention can be produced with a particularly efficient and energy saving refining process as described in published International patent applications WO2010149711 (Karnik et al.) and WO2011055148 (Trevor et al.), thereby further significantly reducing the cost, energy and environmental impact of cellulose fiber material production for the manufacturing of fiber cement compositions and products.

Accordingly, in a first aspect, the present invention provides a cellulose fiber mixture for use in the production of fiber cement products at least comprising:
- micro-cellulose fibers having a Schopper-Riegler degree of between about 70° and about 90°, and
- unrefined cellulose fibers having a Schopper-Riegler degree of below about 25°, characterized in that the micro-cellulose fibers having a Schopper-Riegler degree of between about 70° and about 90°are present in an amount of between about 15% and about 50%.

In particular embodiments, the unrefined cellulose fibers are present in amount of between about 50% and about 85% in the cellulose fiber mixtures of the invention.

In further particular embodiments, the micro-cellulose fibers having a Schopper-Riegler degree of between about 70° and about 90° are present in an amount of about 50% and the unrefined cellulose fibers are present in an amount of about 50% in the cellulose fiber mixtures of the present invention.

In still further particular embodiments, the micro-cellulose fibers having a Schopper-Riegler degree of between about 70° and about 90° are present in an amount of about 45% and the unrefined cellulose fibers are present in an amount of about 55% in the cellulose fiber mixtures of the present invention.

In further particular embodiments, the micro-cellulose fibers having a Schopper-Riegler degree of between about 70° and about 90° are present in an amount of about 40% and the unrefined cellulose fibers are present in an amount of about 60% in the cellulose fiber mixtures of the present invention.

In yet further particular embodiments, the micro-cellulose fibers having a Schopper-Riegler degree of between about 70° and about 90° are present in an amount of about 35% and the unrefined cellulose fibers are present in an amount of about 65% in the cellulose fiber mixtures of the present invention.

In still further particular embodiments, the micro-cellulose fibers having a Schopper-Riegler degree of between about 70° and about 90° are present in an amount of about 30% and the unrefined cellulose fibers are present in an amount of about 70% in the cellulose fiber mixtures of the present invention.

In further particular embodiments, the present invention provides a cellulose fiber mixture for use in the production of fiber cement products, which mixture comprises cellulose fibers consisting of:
- micro-cellulose fibers having a Schopper-Riegler degree of between about 70° and about 90°, and
- unrefined cellulose fibers having a Schopper-Riegler degree of below about 25°, characterized in that the micro-cellulose fibers are present in an amount of between about 15% and about 50%.

In yet further particular embodiments, the average refining Schopper-Riegler degree of the micro-cellulose fibers in the cellulose mixtures of the invention is at least about 75°, particularly at least about 80°, more particularly at least about 85°, most particularly at least about 90°.

In certain particular embodiments, the unrefined cellulose fibers in the cellulose fiber mixtures of the invention have a Schopper-Riegler degree of below about 25°, such as below about 20°, more particularly below about 15°, most particularly below about 10°.

In particular embodiments, the micro-cellulose fibers having a Schopper-Riegler degree of between about 70° and about 90° are present in an amount of between about 15% and about 50% in the cellulose fiber mixtures of the present invention.

In further particular embodiments, the micro-cellulose fibers having a Schopper-Riegler degree of between about 70° and about 90° are present in the cellulose fiber mixtures of the present invention in an amount of between about 20% and about 50%, such as between about 25% and about 50%, particularly between about 30% and about 50%, more particularly between about 40% and about 50%, most particularly between about 45% and about 50%.

In other particular embodiments, the micro-cellulose fibers having a Schopper-Riegler degree of between about 70° and about 90° are present in an amount of between about 15% and about 45% in the cellulose fiber mixtures of the present invention. In further particular embodiments, the micro-cellulose fibers having a Schopper-Riegler degree of between about 70° and about 90° are present in the cellulose fiber mixtures of the present invention in an amount of between about 15% and about 40%, such as between about 15% and about 35%, particularly between about 15% and about 30%, more particularly between about 15% and about 25%, most particularly between about 15% and about 20%.

In particular embodiments, the cellulose fiber mixtures of the present invention further comprise water in an amount of between about 0% and about 50%, such as between about 0.1% and about 45%, such as between about 0.2% and about 40%, in particular between about 0.3% and about 35%, more in particular between about 0.4% and about 30%, most in particular between about 0.5% and about 25%, such as between about 1% and about 20%, such as between about 1% and 15% or between about 1% and 10% of water.

In a second aspect, the present invention provides methods for preparing a fiber cement composition, at least comprising the steps of:
(i) Providing a cellulose fiber mixture according to the invention, and
(ii) Adding the cellulose fiber mixture to a cementitious slurry.

According to particular embodiments, these methods for preparing a fiber cement composition, optionally further comprise the step of drying the cellulose fiber mixture according to the invention prior to the step of adding it to the cementitious slurry.

In a third aspect, the present invention provides fiber cement compositions obtainable by the methods for preparing a fiber cement composition according to this invention.

In a fourth aspect, the present invention provides fiber cement compositions comprising a cellulose fiber mixture according to the present invention.

In a fifth aspect, the present invention provides methods for the production of fiber cement products, and in particular fiber cement building materials, at least comprising the steps of:
(i) Preparing a fiber cement composition according to the invention starting from a fiber cellulose mixture according to the invention,
(ii) Preparing a fiber cement product starting from the fiber cement composition as obtained in step (i) using a fiber cement product manufacturing process, and
(iii) Curing the fiber cement product as obtained in step (ii).

In particular embodiments, the fiber cement product manufacturing process is chosen from the group consisting of a Hatschek process, a Magnani process and a flow-on process.

In a sixth aspect, the present invention provides fiber cement products obtainable by the methods for the production of fiber cement products according to the present invention.

In a seventh aspect, the present invention provides fiber cement products, and in particular fiber cement building materials, comprising a cellulose fiber mixture according to the present invention.

In an eighth aspect, the present invention provides uses of the cellulose fiber mixtures of the present invention for the preparation of a fiber cement compositions and/or for the manufacture of fiber cement products, such as in particular fiber cement building materials.

In an ninth aspect, the present invention provides uses of the fiber cement compositions of the present invention for the manufacture of fiber cement products, such as in particular fiber cement building materials.

In a tenth aspect, the present invention provides uses of the fiber cement products of the present invention as building materials.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

**Figure 1** Schematic illustration of a twin screw conveyor suitable for producing cellulose micro-fibers for use in the cellulose fiber mixtures according to a particular embodiment of the invention.
   The same reference signs refer to the same, similar or analogous elements in the different figures.
   1 twin screw conveyor
   2 inlet
   3 outlet
   4 arrow
   5 flow restriction means
   6 cluster of refining elements
   7 further inlets for liquid
   8 barrel
**Figure 2** Graphical presentation of average data of cumulative water absorption by fiber cement products according to certain embodiments of the invention versus reference fiber cement products (Example 2).
**Figure 3** Graphical presentation of average (4 samples) data of hydric movement by fiber cement products according to certain embodiments of the invention versus reference fiber cement products (Example 2).
**Figure 4** Graphical presentation of average (4 samples) data of CO2 crack dimensional changes of fiber cement products according to certain embodiments of the invention versus reference fiber cement products (Example 2).
**Figure 5** Graphical presentation of average (4 samples) data of modulus of rupture (iMOR) of fiber cement products according to certain embodiments of the invention versus reference fiber cement products (Example 3).

### Description of illustrative embodiments

The present invention will be described with respect to particular embodiments.

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "fiber cementitious slurry" or "fiber cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives. In the context of the processes of the present invention, the fiber cement slurry can thus be provided by one or more sources of at least cement, water and fibers. Optionally, these one or more sources of at least cement, water and fibers may operatively be connected to a continuous mixing device constructed so as to form a cementitious fiber cement slurry. In particular embodiments, when using cellulose fibers or the equivalent of waste paper fibers, a minimum of about 3%, such as about 4%, of the total slurry mass of these cellulose fibers may be used. In further particular embodiments, when exclusively cellulose fibers are used, between about 4% to about 12%, such as more particularly, between about 7% and about 10%, of the total slurry mass of these cellulose fibers is used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers.

The terms "cementitious slurry" or "cement slurry" as referred to herein generally refer to slurries at least comprising water and cement. The cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives.

"Fiber(s)" present in the fiber cement slurry as described herein may be for example process fibers and/or reinforcing fibers which both may be organic fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

The term "water-permeable" as used herein when referring to a water-permeable (region of a) transport belt generally means that the material of which the water-permeable (region of the) belt is made allows water to flow through its structure to a certain extent.

The "water-permeability" as used herein when referring to the water-permeability of a (region of a) transport belt generally refers to the extent or degree to which the material of which the water-permeable (region of the) belt is made, allows water to flow through its structure. Suitable materials for water-permeable transport belts are known to the person skilled in the art, such as but not limited to felts.

The terms "predetermined" and "predefined" as used herein when referring to one or more parameters or properties generally mean that the desired value(s) of these parameters or properties have been determined or defined beforehand, i.e. prior to the start of the process for producing the products that are characterized by one or more of these parameters or properties.

The term "fiber cement layer" as used herein generally refers to any flat, optionally substantially rectangular, layer or cake essentially consisting of a fiber cement composition and having a thickness of at least about 1 mm, in particular between about 1 mm and 200 mm, more particularly between about 2 mm and about 150 mm, most particularly between about 4 mm and about 100 mm.

A "Hatschek fiber cement layer" or a "Hatschek layer" as interchangeably used herein refers to a fiber cement layer (as defined herein), which is produced according to a Hatschek process, which at least comprises the steps of:
(i) building a fiber cement film on a sieve, which rotates in contact with a fiber cement slurry in a vat;
(ii) transferring the fiber cement film from the sieve to a felt transport belt, and
(iii) accumulating the fiber cement film on an accumulator roll via the felt transport belt;

A "(fiber cement) sheet" as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, etc.

The terminology "composition(s) or materials comprising cellulose fibers" as used herein may refer to any suitable material, and is not necessarily limited to paper, recycled paper, and lignocellulosic fiber sources including, but not confined to, retted and green raw hemp, flax, cereal straws, wheat, barley, rye, oats, rice, pomace, spent grain, wood and/or used cotton. As will be understood by the skilled person, the presence of fibers and associated fibrils are part of any suitable material.

The invention will now be further explained in detail with reference to various embodiments. It will be understood that each embodiment is provided by way of example and is in no way limiting to the scope of the invention. In this respect, it will be clear to those skilled in the art that various modifications and variations can be made to the present invention without departing from the scope or spirit of the invention. For instance, features illustrated or described as part of one embodiment, can be used in another embodiment to yield a still further embodiment. Thus, it is intended that the present invention covers such modifications and variations as encompassed within the scope of the appended claims and equivalents thereof.

The present invention provides mixtures of cellulose fibers comprising both micro-cellulose fibers and unrefined cellulose fibers, which mixtures can be produced with a minimum requirement of energy and cost, while being particularly suitable as a fiber starting material for the production of fiber cement compositions and fiber cement products, such as fiber cement building materials.

In particular, the cellulose fiber mixtures as provided by the present invention comprise only between about 15% and about 50% of micro-cellulose fibers, which are characterized by a Schopper-Riegler degree of between about 70° and about 90°. Thus, using the cellulose fiber mixture of the present invention, the relative amount of micro-cellulose fibers required to produce fiber cement compositions and products is substantially reduced in comparison with known procedures. Indeed, known cellulose-based fiber cement compositions typically solely comprise cellulose fiber material that has been refined. It has now been demonstrated by the inventors that using the cellulose mixtures of the invention as a starting material, fiber cement compositions and products can be produced, having at least the same or even improved quality, strength and impact resistance compared to these known cellulose-based fiber cement products.

Furthermore, the highly refined fiber material that is used in the mixtures of the present invention can be produced with a particularly efficient and energy saving refining process as described in published International patent applications WO2010149711 (Karnik et al.) and WO2011055148 (Trevor et al.), thereby further significantly reducing the cost, energy and environmental impact of cellulose fiber material production for the manufacturing of fiber cement compositions and products.

Thus, in a first aspect, the present invention provides cellulose fiber mixtures, comprising both refined and unrefined cellulose fibers, for use in the production of fiber cement products.

More particularly, the cellulose fiber mixtures of the invention at least comprise micro-cellulose fibers having a Schopper-Riegler degree of between about 70° and about 90° in an amount of between about 15% and about 50%.

The process by which the micro-cellulose fibers for the mixtures of the present invention are obtained is not particularly critical. Nevertheless, published International patent applications WO2010149711 (Karnik et al.) and WO2011055148 (Trevor et al.) describe a particularly efficient and cost-effective procedure for producing micro-cellulose fiber material having a Schopper-Riegler degree of between about 70° and about 90°, which can be suitably applied for the production of the refined fibers for the preparation of the mixtures of the invention. In particular, this refining process comprises defibrillating cellulose fibers and is achieved through single or multiple passes of a raw or pre-processed cellulose fiber slurry, with a preferred solid material consistency range of 35 to 55%, through twin-screw fiber processing machines. During this processing operation, fiber slurries are optionally further enhanced with additional fiber and mineral additives to optimise performance of the material for specific end purposes. The hyper defibrillated fiber slurry produced is defined as one reaching a Schopper-Riegler level of between about 70° and about 90° and/or producing a pressed, dried board with a density of preferably at least 850 kg/m³, preferably at least 1200 kg/m³. Compared to traditional defibrillating methods, like single disc, multi-disc or conical refiners, the advantages of using this process compared to other known refining processes are significant energy and time savings, higher comparable output, and a consistency range of between 10% and 80%.

In more detail, the method as described in published International patent applications WO2010149711 and WO2011055148 comprises the production of so-called "cellulose microfibers" (i.e. cellulose fiber having a Schopper-Riegler degree between about 70° and about 90°) by providing a composition comprising cellulose fibers and then admixing an aqueous solution or liquid to the composition to provide a pulp suspension comprising cellulose fibers.

As will be understood by the skilled person, any (ligno)-cellulosic material may be processed with the specific technique as described in WO2010149711 and/or WO2011055148. Preferably, the starting materials comprising cellulose fibers comprise at least about 60% by weight cellulose. It will be understood by the skilled person that such materials may be pre-treated before being applied in the above methods for refining the cellulose fibers. Such pre-treatment may include removal of toxic or unwanted materials, chopping, hammer milling or pinning of the material, washing, and chemical treatments, either singly or combinations thereof. For example, pre-treatment may comprise the use of a paper shredder with an interchangeable hammer mill suitable for preparing hemp, cereal straws and other ligno-cellulosic materials, linked to extraneous (contrary) material separation (wood, metal, stones, plastic, etc) and a cleaning system, including dust removal. The starting composition comprising cellulose fibers that is used for refining according to the procedures described in WO2010149711 and WO2011055148 is mixed with an aqueous solution or liquid, such as tap water or deionised water. Said mixing can for example, be performed by dry feeding the composition comprising cellulose fibres into a twin screw machine. In one embodiment the treatment of the material as it passes along the twin screw machine is varied at different stages. In one embodiment the stages include the kneading of the material and another stage is provided to restrict the flow of the material. As will be understood by the skilled person, if required, the aqueous solution/ liquid may comprise additional materials, for example additives such as described below (but not limited to) wetting agents to accelerate water penetration into the raw material, and/or dilute acids or alkalis to soften the raw material and/or methyl or ethyl alcohols (methanol or ethanol) to soften the raw material.

The mixing with the aqueous solution and/or liquid may be performed by any means known to the skilled person, however preferably, preparing the pulp is achieved by feeding the composition comprising cellulose fibers to a first twin screw that is fitted with a water (or steam) feed system, preferably a meter feed system. In this twin screw the liquid and the composition comprising cellulose fibers are processed into a pulp. Preferably a counter rotating twin screw is applied in this step of the method to soften (lubricate) the fibers thereby minimising fiber damage. In general, for the fiber micronising, treatment and pulping procedures a co-rotating twin screw fiber processing machine can be used at a speed of, for example, 250 RPM and in the range of 400-600RPM and a set temperature of about 50°, but this temperature can be varied according to the fibers being treated, depending on the liquid addition rate and necessity. The consistency of the pulp can be varied from 10% to 80% solids content, which is advantageous in comparison to the methods described in the art, in which the use of much lower consistencies has been reported in a process to prepare cellulose microfibers within, for example, the pulp, paper and board making industries.

The pulp suspension may be provided with a consistency of at least about 30%, such as between about 35% and about 80%, including between about 35% and about 75%, such as between about 35% and about 55%. Within the context of the current application, consistency is defined as the amount of solids in an aqueous suspension of fiber, this aqueous suspension of fiber in water is commonly called "stock" in the pulp and paper industry.

Subsequently, the refining method described in WO2010149711 and WO2011055148 comprises the step of feeding the pulp suspension comprising cellulose fibers into a refining step comprising a mechanical defibrillation process executed using a refining twin screw. The following step is then refining of the pulp suspension comprising cellulose fibers using the refining twin screw, to provide a composition comprising so-called "cellulose microfibers". During the operating of the twin screw, the cellulose fibers, made up of layers of micro-fibers called fibrils, are refined so that the fibrils are partially de-fibrillated (i.e. unravelled) from the parent fiber thus creating a greater number of potential bonding sites, thereby promoting hydrogen bonding between the fibers and/or fibrils. This action is well-known as defibrillation. Therefore, by operating the refining twin screw, the pulp suspension comprising the cellulose fibers is treated such that the obtained composition comprising cellulose microfibers is provided with the characteristic that it obtains a density of at least 850 kg/m³ and that the micro-cellulose fibers have a Schopper-Riegler degree of between about 70° and about 90°. This Schopper-Riegler value can be measured with any known procedure. A standard that could be used is *"BS EN ISO 5267-1 2001. Pulps and determination of drainability. Schopper-Riegler Method".* After obtaining these highly refined cellulose micro-fibers, a drying step can be performed, such as an air-drying step, preferably to a moisture content of 2% to 10% (by weight), preferably 5% to 7% (by weight), as measured using a Metier Toledo HG53-P Moisture Analyzer.

Air drying (or oven drying at 70- 105 °C) to a moisture content of 2% to 10% (by weight) preferably to 5% to 7% (by weight) can be performed by any means known to the skilled person, for example. It is noted that the external pressures, temperatures and forces applied after the refining above all serve to effect a more rapid preliminary drainage, forming and holding of the form and do not represent a premise for achieving high materials strengths.

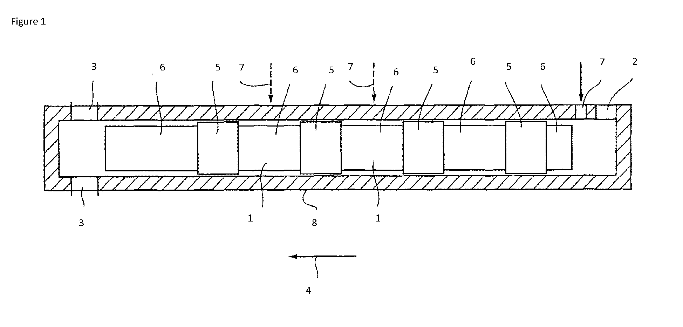

With regard to the twin screw conveyor as described in WO2010149711 and/or WO2011055148, it is noted that the elements at the refining clusters may act as kneading elements to perform a kneading action on the fibers. The means of flow restriction is a series of spiral screw elements formed on the twin screw conveyor which reduce the speed of flow of the material through the conveyor. The screw elements of the conveyor are tri- or bi-lobal, but preferably tri-lobal in order to provide improved refining or defibrillating efficiency. The fibers are fed into the apparatus inlet in a dry format and liquid is separately injected into the conveyer. Turning now to Figure 1 there is illustrated in a schematic manner a twin screw conveyor 1 adapted to provide effective refining and defibrillation of the fibers in accordance with the invention. The apparatus includes an inlet 2 at one end of the conveyor and an outlet 3 at the opposing end which is downstream with respect to the flow of the fibers and liquid through the conveyor in direction of arrow 4. The screw conveyor is provided with a series of stages formed therein which provide differing treatments of the material. Flow restriction means 5 are provided in the form, in this case of left hand spiral screw elements, typically with gaps formed in them. The flow restriction means are provided downstream of a cluster of refining elements 6 as shown. The flow restriction means 5 serve to slow down the flow of the material through the screw conveyor and hence cause the material to back up and be located in the cluster of refining elements upstream for a longer period of time and, thus, cause greater refining and defibrillation to be achieved. The flow restriction means therefore achieve the modulation of the flow rate of the material through the upstream cluster of refining elements and hence allow the desired high refining to be achieved.

The clusters of refining elements provide relatively low energy refining whilst ensuring that the same is effective in achieving the defibrillation of the fibrils. Preferably, a series of clusters 6 are located along the length of the twin screw conveyor as shown rather than a smaller number of longer clusters so as to minimise heat generation. Typically each of the clusters of refining elements comprise kneading elements that are formed to contact with the fibers and perform the refining operation. It is found that if the kneading cluster is too long in length along the conveyor the material can overheat and be dewatered and hence refine less efficiently in the following clusters of the screw. Preferably, the longest possible refining cluster should be positioned at the end of the screw profile i.e. close to the outlet. Further inlets 7 for liquid may be located along the length of the barrel 8 in which the twin screw conveyor is provided to allow any dewatering effect to be mitigated by the addition of the further liquid. With regard to the elements of the twin screw conveyor the same can be bi-lobal but are preferably tri-lobal. Tri-lobal elements show a higher refining efficiency as compared to the bi-lobal counterparts with the refining of defibrillation action on the fibers attributed to the "pinching" portion of the element revolution where material gets caught between the revolving lobes of the identical elements on the position along the shafts and between the tip of the kneading elements of the screw and the barrel wall. During a bi-lobal revolution "pinching" occurs two times per revolution whereas the use of a tri-lobal revolution causes the "pinching" to occur three times and, thus more refining is obtained per full revolution. Preferably, the outer surface of the elements will be formed so as to optimise the refining action, such as, for example, by providing a roughened surface finish. The inner wall of the barrel in which the screw conveyor elements are located may also be provided with a surface finish to increase the refining action at the element-barrel interface. The fiber material may be introduced into the inlet in a substantially dry condition and liquid is introduced separately into the barrel. This allows a consistent refining to be achieved and allows for higher screw speeds to be used. If the solid content of the material can be modulated, then the refining level can also be controlled.

Thus, in particular embodiments, the present invention provides cellulose fiber mixtures for use in the production of fiber cement products, which mixture comprises cellulose fibers consisting of:
- Micro-cellulose fibers (i.e. also called cellulose microfibers) having a Schopper-Riegler degree of between about 70° and about 90°, and
- unrefined cellulose fibers having a Schopper-Riegler degree of below about 25°, characterized in that the micro-cellulose fibers are present in an amount of between about 15% and about 50% and in that the micro-cellulose fibers are obtainable by a process at least comprising the steps of (i) providing a composition comprising cellulose fibers; (ii) admixing an aqueous liquid or other liquid to the composition to provide a pulp suspension comprising cellulose fibers; (iii) feeding the pulp suspension comprising cellulose fibers into a refining step comprising a mechanical defibrillation process executed using a refining twin screw; and (iv) refining of the pulp suspension comprising cellulose fibers using the refining twin screw, to provide a composition comprising the so-called "cellulose microfibers".

The cellulose fiber mixtures according to the present invention further comprise unrefined cellulose fibers. In particular embodiments, the unrefined cellulose fibers are present in amount of between about 50% and about 85% (of the total cellulose fiber weight) in the cellulose fiber mixtures of the invention.

In further particular embodiments, the micro-cellulose fibers having a Schopper-Riegler degree of between about 70° and about 90° are present in an amount of about 50% (of the total cellulose fiber weight) and the unrefined cellulose fibers are present in an amount of about 50% (of the total cellulose fiber weight) in the cellulose fiber mixtures of the present invention.

In still further particular embodiments, the micro-cellulose fibers having a Schopper-Riegler degree of between about 70° and about 90° are present in an amount of about 45% (of the total cellulose fiber weight) and the unrefined cellulose fibers are present in an amount of about 55% (of the total cellulose fiber weight) in the cellulose fiber mixtures of the present invention.

In further particular embodiments, the micro-cellulose fibers having a Schopper-Riegler degree of between about 70° and about 90° are present in an amount of about 40% (of the total cellulose fiber weight) and the unrefined cellulose fibers are present in an amount of about 60% (of the total cellulose fiber weight) in the cellulose fiber mixtures of the present invention.

In yet further particular embodiments, the micro-cellulose fibers having a Schopper-Riegler degree of between about 70° and about 90° are present in an amount of about 35% (of the total cellulose fiber weight) and the unrefined cellulose fibers are present in an amount of about 65% (of the total cellulose fiber weight) in the cellulose fiber mixtures of the present invention.

In still further particular embodiments, the micro-cellulose fibers having a Schopper-Riegler degree of between about 70° and about 90° are present in an amount of about 30% (of the total cellulose fiber weight) and the unrefined cellulose fibers are present in an amount of about 70% (of the total cellulose fiber weight) in the cellulose fiber mixtures of the present invention.

In certain particular embodiments, the unrefined cellulose fibers in the cellulose fiber mixtures of the invention have a Schopper-Riegler degree of below about 25°, such as below about 20°, more particularly below about 15°, most particularly below about 10°.

In further particular embodiments, the present invention provides a cellulose fiber mixture for use in the production of fiber cement products, which mixture comprises cellulose fibers consisting of:
- micro-cellulose fibers having a Schopper-Riegler degree of between about 70° and about 90°, and
- unrefined cellulose fibers having a Schopper-Riegler degree of below about 25°, characterized in that the micro-cellulose fibers are present in an amount of between about 15% and about 50%.

In yet further particular embodiments, the average refining Schopper-Riegler degree of the micro-cellulose fibers in the cellulose mixtures of the invention is at least about 75°, particularly at least about 80°, more particularly at least about 85°, most particularly at least about 90°.

In particular embodiments, the micro-cellulose fibers having a Schopper-Riegler degree of between about 70° and about 90° are present in an amount of between about 15% and about 50% in the cellulose fiber mixtures of the present invention.

In further particular embodiments, the micro-cellulose fibers having a Schopper-Riegler degree of between about 70° and about 90° are present in the cellulose fiber mixtures of the present invention in an amount of between about 20% and about 50%, such as between about 25% and about 50%, particularly between about 30% and about 50%, more particularly between about 40% and about 50%, most particularly between about 45% and about 50%.

In other particular embodiments, the micro-cellulose fibers having a Schopper-Riegler degree of between about 70° and about 90° are present in an amount of between about 15% and about 45% in the cellulose fiber mixtures of the present invention. In further particular embodiments, the micro-cellulose fibers having a Schopper-Riegler degree of between about 70° and about 90° are present in the cellulose fiber mixtures of the present invention in an amount of between about 15% and about 40%, such as between about 15% and about 35%, particularly between about 15% and about 30%, more particularly between about 15% and about 25%, most particularly between about 15% and about 20%.

In particular embodiments, the cellulose fiber mixtures of the present invention further comprise water in an amount of between about 0% and about 50%, such as between about 0.1% and about 45%, such as between about 0.2% and about 40%, in particular between about 0.3% and about 35%, more in particular between about 0.4% and about 30%, most in particular between about 0.5% and about 25%, such as between about 1% and about 20%, such as between about 1% and 15% or between about 1% and 10% of water.

In a second aspect, the present invention provides methods for preparing a fiber cement composition, at least comprising the steps of:
(i) Providing a cellulose fiber mixture according to the invention, and
(ii) Adding the cellulose fiber mixture to a cementitious slurry.

The step of providing a cellulose fiber mixture according to the invention can be done by suitably mixing or adding together at least an amount of micro-cellulose micro-fibers having an SR degree of between about 70° and about 90° as described in detail above (and optionally prepared by the methods as described herein) and an amount of untreated or unrefined cellulose fibers, such that the percentage of micro-cellulose fibers having an SR degree of between about 70° and about 90° is between about 15% and about 50% of the total cellulose fiber weight in the mixture.

In particular embodiments, the step of providing a cellulose fiber mixture according to the invention can be done so as to obtain mixtures comprising unrefined cellulose fibers in amount of between about 50% and about 85% of the total cellulose fiber weight in the mixture.

In further particular embodiments, the step of providing a cellulose fiber mixture according to the invention can be done by adding together (or mixing) micro-cellulose fibers having a Schopper-Riegler degree of between about 70° and about 90° and unrefined cellulose fibers in equal amounts so that the total cellulose fiber content in the mixture comprises about 50% of micro-cellulose fiber with SR between about 70° and about 90° and about 50% of unrefined cellulose fibers.

In other particular embodiments, the step of providing a cellulose fiber mixture according to the invention can be done by adding together (or mixing) micro-cellulose fibers having a Schopper-Riegler degree of between about 70° and about 90° and unrefined cellulose fibers in different amounts so that the total cellulose fiber content in the mixture comprises about 40% of micro-cellulose fiber with SR between about 70° and about 90° and about 60% of unrefined cellulose fibers.

In yet other particular embodiments, the step of providing a cellulose fiber mixture according to the invention can be done by adding together (or mixing) micro-cellulose fibers having a Schopper-Riegler degree of between about 70° and about 90° and unrefined cellulose fibers in different amounts so that the total cellulose fiber content in the mixture comprises about 30% of micro-cellulose fiber with SR between about 70° and about 90° and about 70% of unrefined cellulose fibers.

After providing a cellulose mixture according to the present invention, the methods for preparing fiber cement composition according to the present invention comprise adding the cellulose fiber mixture to a cementitious slurry (as defined herein), at least comprising cement and water. This can be done by any means known in the art, such as but not limited to conventional feeding and/or mixing systems suitable for the preparation of fiber cement slurries and fiber cement compositions. According to particular embodiments, these methods for preparing a fiber cement composition, optionally further comprise the step of drying the cellulose fiber mixture according to the invention prior to the step of adding the cellulose fiber mixture to the cementitious slurry. Indeed, after obtaining these highly micro-cellulose micro-fibers, a drying step can be performed, such as an air-drying step, preferably to a moisture content of 2% to 10% (by weight), preferably 5% to 7% (by weight), as measured using a Metier Toledo HG53-P Moisture Analyzer.

In a third aspect, the present invention provides fiber cement compositions obtainable by the methods for preparing a fiber cement composition according to this invention.

In a fourth aspect, the present invention provides fiber cement compositions comprising a cellulose fiber mixture according to the present invention.

In a fifth aspect, the present invention provides methods for the production of fiber cement products, and in particular fiber cement building materials, at least comprising the steps of:
(i) Preparing a fiber cement composition according to the invention starting from a fiber cellulose mixture according to the invention,
(ii) Preparing a fiber cement product starting from the fiber cement composition as obtained in step (i) using a fiber cement product manufacturing process, and
(iii) Curing the fiber cement product as obtained in step (ii).

The first step in these methods comprises preparing a fiber cement composition according to the invention starting from a fiber cellulose mixture according to the invention. As already explained above, this can be suitably done by adding the cellulose fiber mixture to a cementitious slurry (as defined herein), at least comprising cement and water. This can be done by any means known in the art, such as but not limited to conventional feeding and/or mixing systems suitable for the preparation of fiber cement slurries and fiber cement compositions.

A further step in the methods for the production of fiber cement products comprises preparing a fiber cement product starting from the fiber cement composition as obtained in step (i) using a fiber cement product manufacturing process. This step can be performed according to any method known in the art for preparing fiber cement products, essentially consisting of at least water, cement and fibers.

The process most widely used for manufacturing fiber cement products is the Hatschek process, which is performed using a modified sieve cylinder paper making machine. Other manufacturing processes include the Magnani process, injection, extrusion, flow-on and others. In particular embodiments, the fiber cement products of the present invention are provided by using the Hatschek process. The "green" or uncured fiber cement product is optionally post-compressed usually at pressures in the range from about 22 to about 30 MPa to obtain the desired density.

The processes according to the present invention may further comprise the step of cutting the fiber cement products to a predetermined length to form a fiber cement product. Cutting the fiber cement products to a predetermined length can be done by any technique known in the art, such as but not limited to water jet cutting, air jet cutting or the like. The fiber cement products can be cut to any desirable length, such as but not limited to a length of between about 1 m and about 15 m, such as between about 1 m and about 10 m, more particularly between about 1 m and about 5 m, most particularly between about 1 m and about 3 m.

It will be understood by the skilled person that the processes of the present invention may further comprise additional steps of processing the produced fiber cement products.

For instance, in certain particular embodiments, during the processes of the present invention, the fiber cement slurry and/or the fiber cement products may undergo various intermediate treatments, such as but not limited to treatment with one or more hydrophobic agents, treatment with one or more flocculants, additional or intermediate pressing steps, etc.

As soon as the fiber cement products are formed, these are trimmed at the lateral edges. The border strips can optionally be recycled through immediate mixing with the recycled water and directing the mixture to the mixing system again.

In yet a further step of the methods for the production of fiber cement products of the invention, the obtained fiber cement products are cured. Indeed, after production, fiber cement products can be allowed to cure over a time in the environment in which they are formed, or alternatively can be subjected to a thermal cure (e.g. by autoclaving or the like).

In particular embodiments, the "green" fiber cement product is cured, typically by curing to the air (air cured fiber cement products) or under pressure in presence of steam and increased temperature (autoclave cured). For autoclave cured products, typically sand is added to the original fiber cement slurry. The autoclave curing in principle results in the presence of 11.3 A (angstrom) Tobermorite in the fiber cement product.

In further particular embodiments, the "green" fiber cement product may be first pre-cured to the air, after which the pre-cured product is further air-cured until it has its final strength, or autoclave-cured using pressure and steam, to give the product its final properties.

In particular embodiments of the present invention, the methods for the production of fiber cement products of the invention may further comprise the step of thermally drying the obtained fiber cement products. After curing, the fiber cement product being a panel, sheet or plate, may still comprise a significant weight of water, present as humidity. This may be up to 10 even 15 %w, expressed per weight of the dry product. The weight of dry product is defined as the weight of the product when the product is subjected to drying at 105°C in a ventilated furnace, until a constant weight is obtained.

In certain embodiments, the fiber cement product is dried. Such drying is done preferably by air drying and is terminated when the weight percentage of humidity of the fiber cement product is less than or equal to 8 weight %, even less than or equal to 6 weight %, expressed per weight of dry product, and most preferably between 4 weight % and 6 weight %, inclusive.

In a sixth aspect, the present invention provides fiber cement products obtainable by the methods for the production of fiber cement products according to the present invention.

In a seventh aspect, the present invention provides fiber cement products, and in particular fiber cement building materials, comprising a cellulose fiber mixture according to the present invention.

In the context of the present invention, fiber cement products are to be understood as cementitious products comprising cement and at least cellulose fibers in the form of the cellulose mixture of the present invention. The fiber cement products are made out of fiber cement slurry, which is formed in a so-called "green" fiber cement product, and then cured.

Dependent to some extent on the curing process used , the fiber cement slurry typically comprises water, process or reinforcing fibers which are cellulose fibers and optionally synthetic organic fibers, cement (e.g. Portland cement), limestone, chalk, quick lime, slaked or hydrated lime, ground sand, silica sand flour, quartz flour, amorphous silica, condensed silica fume, microsilica, kaolin, metakaolin, wollastonite, mica, perlite, vermiculite, aluminum hydroxide (ATH), pigments, anti-foaming agents, flocculants, and/or other additives. Optionally color additives (e.g. pigments) are added, to obtain a fiber cement product which is so-called colored in the mass.

In particular embodiments, the fiber cement products of the invention have a thickness of between about 4 mm and about 200 mm, in particular between about 6 mm and about 200 mm, more in particular between about 8 mm and about 200 mm, most in particular between about 10 mm and about 200 mm.

The fiber cement products as referred to herein include roof or wall covering products made out of fiber cement, such as fiber cement sidings, fiber cement boards, flat fiber cement sheets, corrugated fiber cement sheets and the like. According to particular embodiments, the fiber cement products according to the invention can be roofing or façade elements, flat sheets or corrugated sheets. According to further particular embodiments, the fiber cement products of the present invention are fiber cement sheets.

The fiber cement products of the present invention comprise from about 0.1 to about 5 weight%, such as particularly from about 0.5 to about 4 weight% of fibers, such as more particularly between about 1 to 3 weight% of fibers with respect to the total weight of the fiber cement product.

According to particular embodiments, the fiber cement products according to the invention are characterized in that it comprises fibers chosen from the group consisting of cellulose fibers and other inorganic or organic reinforcing fibers in a weight % of about 0.1 to about 5. In particular embodiments, organic fibers are selected from the group consisting of polypropylene, polyvinylalcohol polyacrylonitrile fibers, polyethyelene, cellulose fibres (such as wood or annual kraft pulps), polyamide fibers, polyester fibers, aramide fibers and carbon fibers. In further particular embodiments, inorganic fibers are selected from the group consisting of glass fibers, rockwool fibers, slag wool fibers, wollastonite fibers, ceramic fibers and the like. In further particular embodiments, the fiber cement products of the present invention may comprise fibrils fibrids, such as for example but not limited to, polyolefinic fibrils fibrids % in a weight % of about 0.1 to 3, such as "synthetic wood pulp".

According to certain particular embodiments, the fiber cement products of the present invention comprise 20 to 95 weight % cement as hydraulic binder. Cement in the products of the invention is selected from the group consisting of Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

According to particular embodiments, the fiber cement products according to the invention optionally comprise further components. These further components in the fiber cement products of the present invention may be selected from the group consisting of water, sand, silica sand flour, condensed silica fume, microsilica, fly-ashes, amorphous silica, ground quartz, the ground rock, clays, pigments, kaolin, metakaolin, blast furnace slag, carbonates, puzzolanas, aluminium hydroxide, wollastonite, mica, perlite, calcium carbonate, and other additives (e.g. colouring additives) etc. It will be understood that each of these components is present in suitable amounts, which depend on the type of the specific fiber cement product and can be determined by the person skilled in the art. In particular embodiments, the total quantity of such further components is preferably lower than 70 weight % compared to the total initial dry weight of the composition.

Further additives that may be present in the fiber cement products of the present invention may be selected from the group consisting of dispersants, plasticizers, antifoam agents and flocculants. The total quantity of additives is preferably between about 0.1 and about 1 weight % compared to the total initial dry weight of the composition.

Thus, based on the above, it will be clear that, in an eighth aspect, the present invention provides uses of the cellulose fiber mixtures of the present invention for the preparation of fiber cement compositions and/or for the manufacture of fiber cement products, such as in particular fiber cement building materials.

Furthermore, in a ninth aspect, the present invention also provides uses of the fiber cement compositions of the present invention for the manufacture of fiber cement products, such as in particular fiber cement building materials.

Finally, in a tenth aspect, the present invention provides uses of the fiber cement products of the present invention as building materials.

These fiber cement building materials may be porous materials comprising one or more different materials such as a gypsum composite, cement composite, geopolymer composite or other composites having an inorganic binder. The surface of the material may be sanded, machined, extruded, molded or otherwise formed into any desired shape by various processes known in the art. The fiber cement building materials may be fully cured, partially cured or in the uncured "green" state. Fiber cement building materials may further include gypsum board, fiber cement board, fiber cement board reinforced by a mesh or continuous fibers, gypsum board reinforced by short fibers, a mesh or continuous fibers, inorganic bonded wood and fiber composite materials, geopolymer bonded wood and fiber boards, concrete roofing tile material, and fiber-plastic composite material. In particular embodiments, the fiber cement products of the invention are fiber cement sheets produced by the processes of the present invention and can be used to provide an outer surface to walls, both internal as well as external a building or construction, e.g. as façade plate, siding, etc.

### EXAMPLES

It will be appreciated that the following examples, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention that is defined in the following claims and all equivalents thereto. Further, it is recognized that many embodiments may be conceived that do not achieve all of the advantages of some embodiments, yet the absence of a particular advantage shall not be construed to necessarily mean that such an embodiment is outside the scope of the present invention.

### Example 1: Preparation of a cellulose fiber mixture according to a particular embodiment of the invention

A cellulose fiber mixture was prepared, comprising about 17% (of the total cellulose fiber weight) of cellulose micro-fibers (refined Canfor fibers having a Schopper-Riegler degree of between about 70° and about 90°), and about 83% (of the total cellulose fiber weight) of unrefined cellulose fibers (Tasman fibers having a Schopper-Riegler degree of below about 25°).

First, micro-cellulose fiber material having a Schopper-Riegler degree of between about 70° and about 90° was prepared through single or multiple passes of a raw or pre-processed cellulose fiber slurry (i.e. essentially comprising cellulose fibers and liquid solvent), with a preferred solid material consistency range of 35 to 55%, through twin-screw fiber processing machines.

In particular, preparing the pulp was achieved by feeding the composition comprising cellulose fibers to a first twin screw that is fitted with a water feed system. In this twin screw the liquid and the composition comprising cellulose fibers are processed into a pulp. A counter rotating twin screw was applied in this step of the method to soften (lubricate) the fibers thereby minimising fiber damage. The following step was then refining of the pulp suspension comprising cellulose fibers using a refining twin screw (as described in detail in WO2010149711 and/or WO2011055148) to provide a composition comprising so-called "cellulose microfibers". By operating the refining twin screw, the pulp suspension comprising the cellulose fibers was treated such that the obtained composition comprising cellulose microfibers is provided with the characteristic that it obtains a density of at least 850 kg/m³ and that the refined cellulose fibers have a Schopper-Riegler degree of between about 70° and about 90°. After obtaining these highly refined cellulose micro-fibers, an air-drying step was performed to a moisture content of between about 2% to about 10% (by weight), as measured using a Metier Toledo HG53-P Moisture Analyzer. Compared to traditional defibrillating methods, like single disc, multi-disc or conical refiners, the advantages of using this process compared to other known processes are significant energy and time savings, higher comparable output, and a consistency range of between 10% and 80%.

Subsequently, this micro-cellulose fiber material was mixed with untreated, unrefined cellulose material in a ratio of 1 to 4.88 (i.e. to obtain a mixture wherein the cellulosic material comprised about 17 % of micro-cellulose fibers and about 83 % of unrefined cellulose fibers).

### Example 2: Production of fiber cement products using a cellulose fiber mixture of the invention according to one particular embodiment of the invention

The cellulose fiber mixture as described in Example 1 above was used for the production of fiber cement products.

### 2.1 Methods and Materials

A "test fiber cement slurry" was prepared by adding about 7.5 weight % (compared to total dry weight of slurry) of the cellulose fiber mixture as prepared in Example 1 to a cementitious slurry essentially comprising cement, water, sand and water.

In the same way, a "reference fiber cement slurry" was prepared by adding about 7.5 weight % (compared to total dry weight of slurry) cellulose fibers (i.e. about 5% of Tasman fibers and about 2.5% of Navia fibers to a cementitious slurry essentially comprising cement, water, sand and water (Table 1).

**Table 1: Composition of "Reference fiber cement composition" and "Test fiber cement composition", the latter as used to produce fiber cement products according to an embodiment of the invention**

| **Reference fiber cement composition** | | **Test fiber cement composition** | |
|---|---|---|---|
| **Feedstock** | **% of weight compared to total dry weight of composition** | **Feedstock** | **% of weight compared to total dry weight of composition** |
| Tasman cellulose fibers | 4.92 | Tasman cellulose fibers | 6.12 |
| Navia cellulose fibers | 2.46 | Canfor micro-cellulose fibers (17% of total cellulose amount; SR between 70° and 90°) | 1.26 |
| Cement | 32.62 | Cement | 32.62 |
| Sand | 32.62 | Sand | 32.62 |
| Minerals and additives | 27.36 | Minerals and additives | 27.36 |

Both the test cementitious slurry and the reference cementitious slurry were prepared by a conventional feeding and mixing system suitable for the preparation of fiber cement slurries. Cementitious products were manufactured by an industrial Hatschek process. Both for the test cementitious products and the reference cementitious products, were used as the sole reinforcing material to the raw matrix material.

The fiber cement sheets were hardened during one night at 50 °C, and afterwards under plastic cover sheet during 14 days at room temperature.

A number of test samples and reference samples were further analysed.

In this regard, the following physical and mechanical properties of the produced fiber cement products were measured (Table 2):
(1) Strength (modulus of rupture (MOR)) on oven dry samples.
(2) E-modulus on oven dry samples.
(3) Breaking energy on oven dry samples.
(4) Moisture
(5) Porosity
(6) Density on dry samples
(7) Hydric movement on saturated vs. oven dry samples.
(8) Thermal Shrinkage
(9) Delamination resistance
(10) Cumulative H₂O absorption
(11) CO₂ dimensional change

Properties (1) to (6) were measured using Instron apparatus at about 20°C, which apparatus essentially performs a 3-point bending test on different samples having dimensions of about 16 cm length to about 3.5 cm width.

Hydric movement (7) was determined by measuring dimension changes of samples after different cycles (typically 3) of putting samples immersed in water for 3 days versus putting samples in the oven at 105° for 3 days.

Thermal shrinkage (8) was determined by measuring dimension changes of samples after different cycles (typically 3) of samples immersed in water for 3 days versus samples dried in the oven at 950° for 3 hours.

Delamination resistance (9) was determined by measuring the force needed to tear two dollies (diameter of about 50 mm), which were glued on two opposite surfaces of a sample with a 2-component adhesive of Araldite, from both opposite sides of the sample. This was done with a standard delamination measuring device (Elcometer AP287).

Cumulative H₂O absorption (10) was measured using a standard Karsten test.

CO₂ dimensional change (11) was determined by measuring dimensional changes and observing cracks of samples after different cycles (typically 3) of samples immersed in water at 40°C having a CO₂ saturation percentage of about 20%, followed by drying for 3 days at 105°C.

### 2.2 Results

As can be seen from the results presented in Table 2, hydric movements of test samples never exceed 1.40 mm/m (Table 2). The average delamination resistance was about 0.59 N/mm², which was slightly lower that of the reference: 0.61 N/mm². Results from tests for other properties, such as strength, E-modulus, breaking energy, porosity and density of the test samples were found to be at least comparable to the results for the same properties of the reference samples (Table 2).

**Table 2: Summary of results obtained after measuring different physical and mechanical properties of the produced fiber cement products**

| **Property** | **Thickness** | **Strength** | **E-modulus** | **Breaking energy** | **Moisture** | **Porosity** | **Density** | **Hydric Movement** | **Thermal shrinkage** | | **Delamination Resistance** |
|---|---|---|---|---|---|---|---|---|---|---|---|
| **Unit** | mm | N/mm² | N/mm² | Nm/dm³ | % | % | kg/dm³ | mm/m | % | % | N/mm² |
| **Reference samples made with reference fiber cement composition (see Table 1)** | 12,3 | 18,5 | 8401 | 2,57 | 0,4 | 39,1 | 1,16 | 1,13 | 0,92 | 6,97 | 0,61 |
| **Test samples made with test fiber cement composition (see Table 1)** | 12,2 | 17,7 | 8435 | 2,27 | 0,1 | 38,6 | 1,18 | 1,18 | 0,88 | 6,53 | 0,59 |

| | | | | | | | | | | | |
|---|---|---|---|---|---|---|---|---|---|---|---|
| Table 2 shows the results that were obtained with regard to the rupture modulus of the fiber cement products manufactured using the cellulose fiber mixture as presented in Table 1 (Example 1). The results in Table 2 represent average values from several sample tests. It was observed that the properties of the obtained fiber cement products were generally improved or at least comparable to the properties of the reference fiber cement products. | | | | | | | | | | | |

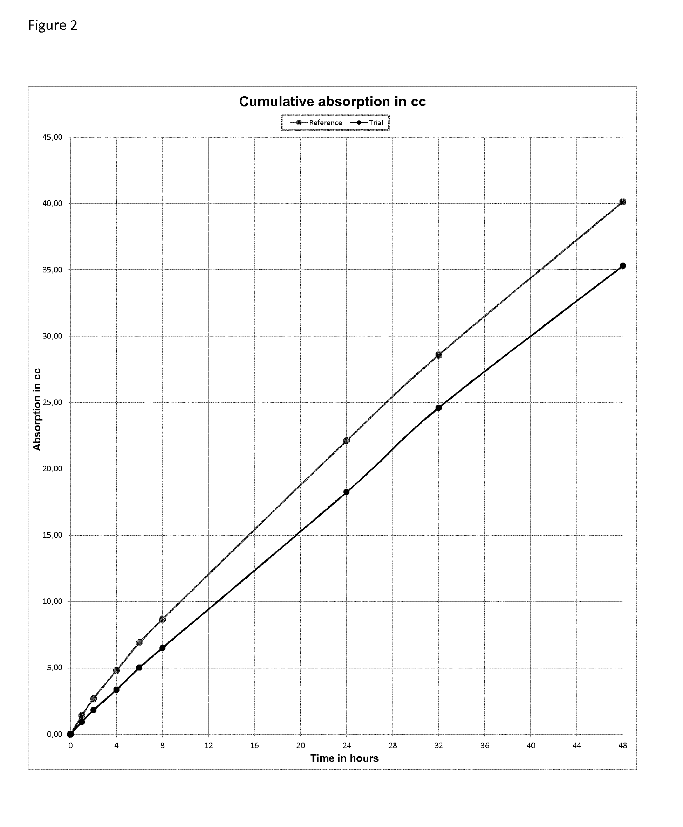

The average data of water absorption are presented in Figure 2. As one can conclude from this diagram, the test fiber cement samples with micro-cellulose fibers absorb less water than the reference samples during the whole time of measurement.

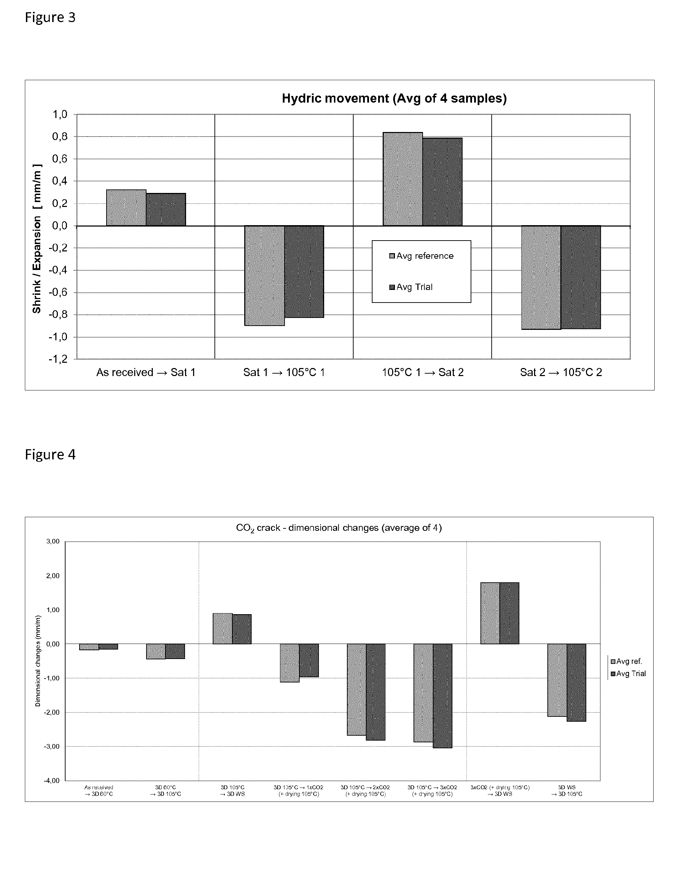

The same tendency can be traced in hydric movement data as presented in Figure 3. Indeed, deformation of the test fiber cement samples with micro-cellulose fibers are always lower than those of the reference samples.

CO₂ dimensional change data are demonstrated in Figure 4. As one can see, deformations of test fiber cement samples with micro-cellulose fibers are not significantly higher than those of the reference samples.

### Example 3: Production of fiber cement products using a cellulose fiber mixture of the invention according to one particular embodiment of the invention

### 3.1 Methods and Materials

A "reference fiber cement slurry" (ref. 1 in Table 3) and three "test fiber cement slurries" (refs. (2) to (4) in Table 3) were prepared having the compositions as mentioned in table 3 below.

**Table 3: Composition of "Reference fiber cement composition" (1) and "Test fiber cement compositions" (2) to (4), the latter as used to produce fiber cement products according to a particular embodiment of the invention**

| **Ingredient** | **1** | **2** | **3** | **4** |
|---|---|---|---|---|
| | **%** | **%** | **%** | **%** |
| **Unrefined Tasman** | 0,00 | 5,52 | 6,40 | 5,52 |
| **Refined Tasman 25°SR** | 8,00 | 5,52 | 6,40 | 5,52 |
| **Micro-Tasman** | 0,00 | 2,48 | 1,60 | 2,48 |
| **Micro-WP3** | 0,00 | 0,00 | 0,00 | 2,48 |
| **Alolt 8-ET** | 4,00 | 4,00 | 4,00 | 4,00 |
| **P30 (Cement)** | 35,50 | 35,50 | 35,50 | 35,50 |
| **A08 (PVA)** | 0,00 | 0,00 | 0,00 | 0,00 |
| **M300 (Sand)** | 52,50 | 52,50 | 52,50 | 52,50 |
| **Total weight, %** | 100,00 | 100,00 | 100,00 | 100,00 |

Both the test cementitious slurry and the reference cementitious slurry were prepared by a conventional feeding and mixing system suitable for the preparation of fiber cement slurries.

Cementitious products were manufactured by an industrial Hatschek process. Both for the test cementitious products and the reference cementitious products, were used as the sole reinforcing material to the raw matrix material.

The fiber cement sheets were hardened during one night at 50 °C, and afterwards under plastic cover sheet during 14 days at room temperature.

A number of test samples and reference samples were analysed for their characteristics with regard to modulus of rupture. Modulus of rupture (iMOR) is a standard property indicative for the strength of fiber cement products. The property was measured using Instron apparatus at about 20°C, which apparatus essentially performs a 3-point bending test on different samples having dimensions of about 16 cm length to about 3.5 cm width.

### 2.2 Results

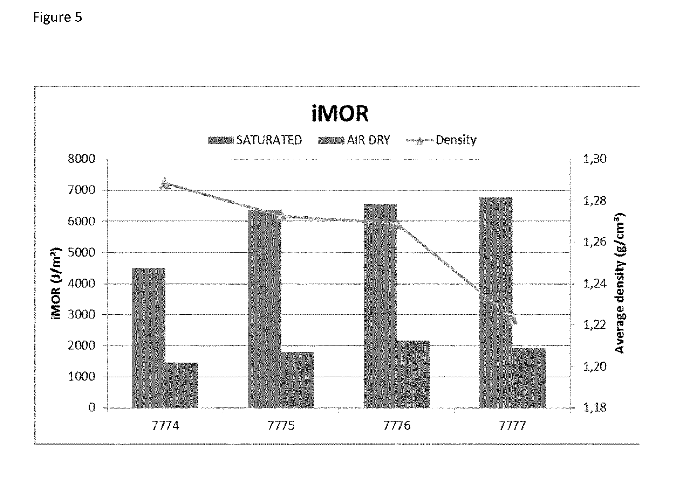

As can be seen from the results presented in Figure 5, the modulus of rupture (iMOR) of the test samples is significantly higher than that of the reference sample, and this both in water-saturated and dry conditions. This clearly demonstrates that all test samples (2) to (4) containing the cellulose mixture according to the invention clearly have a higher strength as compared to the reference sample (Figure 5).

### Conclusion

From the above results, it is clear that fiber cement products manufactured starting from a cellulose fiber mixture according to the present invention showed at least comparable and even improved strength properties when compared to known fiber cement products.

The specific mixtures of cellulose fibers of the present invention, in which the relative amount of refined cellulose fibers is substantially reduced compared to known products, were produced with a minimum requirement of energy and cost and were demonstrated to be particularly suitable as a fiber starting material for the production of fiber cement compositions and fiber cement product. Thus, the present inventors have herewith provided a more economically and environmentally friendly method for providing fiber cement compositions comprising cellulose fibers.

## Claims

1. Cellulose fiber mixture for use in the production of fiber cement products at least comprising:
- micro-cellulose fibers having a Schopper-Riegler degree of between about 70° and about 90°, and
- unrefined cellulose fibers having a Schopper-Riegler degree of below about 25°, **characterized in that** said micro-cellulose fibers having a Schopper-Riegler degree of between about 70° and about 90°are present in an amount of between about 15% and about 50%.

2. The cellulose fiber mixture according to claim 1, wherein said unrefined cellulose fibers are present in amount of between about 50% and about 85%.

3. The cellulose fiber mixture according to any of claims 1 or 2, wherein said unrefined cellulose fibers are present in amount of between of between about 45% and about 50%.

4. The cellulose fiber mixture according to any of claims 1 or 2, wherein said unrefined cellulose fibers are present in amount of between of between about 15% and about 30%.

5. The cellulose fiber mixture according to any of claims 1 to 4, which further comprises water in an amount of between about 1% and about 20%.

6. Method for preparing a fiber cement composition, at least comprising the steps of:
(i) Providing a cellulose fiber mixture as defined in any of claims 1 to 5, and
(ii) Adding said cellulose fiber mixture to a cementitious slurry.

7. The method according to claim 6, optionally further comprising the step of drying the cellulose fiber mixture prior to step (ii) of adding said mixture to a cementitious slurry.

8. Fiber cement composition obtainable by the method according to any of claims 6 or 7.

9. Fiber cement composition comprising a cellulose fiber mixture according to any of claims 1 to 5.

10. Method for the production of a fiber cement product, at least comprising the steps of:
(i) Preparing a fiber cement composition starting from a fiber cellulose mixture as defined in any of claims 1 to 5,
(ii) Preparing a fiber cement product starting from the fiber cement composition obtained in step (i) using a fiber cement product manufacturing process, and
(iii) Curing the fiber cement product as obtained in step (ii).

11. The method according to claim 10, wherein said fiber cement product manufacturing process is chosen from the group consisting of a Hatschek process, a Magnani process, an injection process, an extrusion process and a flow-on process.

12. Fiber cement product obtainable by the method according to claim 11.

13. Fiber cement product comprising a cellulose fiber mixture according to any of claims 1 to 5 or a fiber cement composition according to any of claims 8 or 9.

14. Use of the cellulose fiber mixture according to any of claims 1 to 5 for the preparation of a fiber cement composition and/or for the manufacture of a fiber cement product.

15. Use of the fiber cement product according to any of claims 12 or 13 as a building material.
